# EUROPEAN PATENT SPECIFICATION

(11) **EP 1 278 097 B1**
(45) Date of publication and mention of the grant of the patent: **01.03.2006**
(21) Application number: 01306108.0
(22) Date of filing: 16.07.2001
(51) Int. Cl.: G02F 1/1343

(54) **Electrode structure for an in-plane switching mode liquid crystal display device**
Elektrodenanordnung für eine in der Ebene schaltende Flüssigkristall-Anzeigevorrichtung
Structure d'électrodes pour un dispositif d'affichage à cristaux liquides à commutation dans le plan

(43) Date of publication of application: 22.01.2003
(73) Proprietor: Hannstar Display Corporation, Yang-Mei T'ao yuan Hsien 326 (TW)
(72) Inventor: Yang, Kie-Hsiung, Yang-Mei Chen, Taoyuan Hsien, Taiwan (CN)
(74) Representative: O'Connell, David Christopher

(56) References cited:
- US-A- 5 745 207
- US-A- 5 905 556
- US-A- 6 137 557
- US-A- 6 141 078
- PATENT ABSTRACTS OF JAPAN vol. 1995, no. 10, 30 November 1995 (1995-11-30) & JP 07 191336 A (TOSHIBA CORP), 28 July 1995 (1995-07-28)

## Description

### Field of the Invention

The present invention relates to an In-Plane Switching mode LCD (IPS-LCD) and, more particularly, to an electrode array structure of an IPS-LCD and a method of forming the same.

### Description of the Related Art

Liquid crystal displays (LCDs) may be classified by the orientation of the liquid crystal molecules between the spaced apart substrates. In a conventional twisted nematic LCD (TN-LCD), the liquid crystal molecules are twisted between the two substrates. In contrast, in an in-plane switching mode LCD (IPS-LCD), common electrodes and pixel electrodes are formed on a lower glass substrate (TFT substrate) and an in-plane electric field therebetween is generated to rearrange the liquid crystal molecules along the in-plane electric field. Accordingly, the IPS-LCD has been used or suggested for improving viewing angle, contrast ratio and color shift.

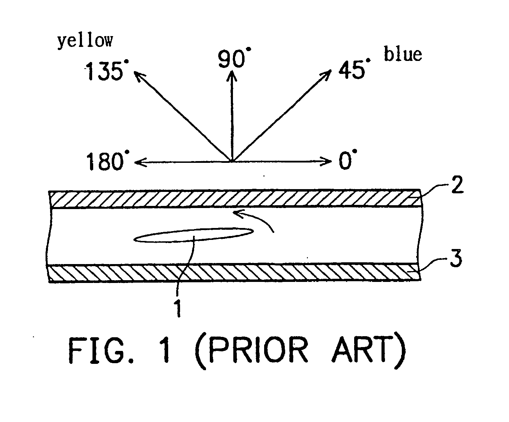

In the IPS-LCD, the display characteristics of the view angle with respect to the invert luminance are superior. However, as shown in Fig.1, when the liquid crystal molecules 1 are rotated to an angle 45° with respect to the in-plane electric field, the observed image from the direction crossing at 45 degrees or 135 degrees against the lengthwise direction of the common electrodes 2 and the pixel electrodes 3 is coloured blue or yellow. This is a problem to be solved in the image quality of the IPS-LCD.

Seeking to solve the colouring phenomenon, a herringbone-shaped electrode structure is developed for modifying the rotating angle of the liquid crystal molecules. As shown in Fig. 2, in the prior art IPS-LCD, disclosed in Figure 4 of US 5,745,207, a TFT substrate 10 has a plurality of parallel date lines 12 extending along Y-axis and a plurality of parallel gate lines 14 extending along X-axis, which are arranged in a manner to form a matrix of pixel areas 24. Also, a pixel electrode 18 and a common electrode 20 are disposed in each pixel area 24, and at least one TFT device 16 is disposed at a cross-point of the data line 12and the gate line 14. In addition, an orientation layer (not shown) is spread on the entire surface of the TFT substrate 10, and the orientation layer is rubbed in a direction shown by arrow A so as to make liquid crystal molecules 22 arrange along the direction A before an external voltage is applied to the TFT substrate 10.

The pixel electrode 18 has a bar 18a transversely disposed over the gate line 14 to form a capacitor, and a plurality of herringbone-shaped teeth 18b, 18c extending along Y-axis from the bar 18a. The common electrode 20 has a centre portion 20a extending along X-axis, and a plurality of herringbone-shaped teeth 20b, 20c bent at the center wiring portion 20a and respectively extending along a first Y-axis and a second Y-axis. For example, the teeth 20b extending along the first Y-axis are parallel to the teeth 18b, 18c and the teeth 20b are arranged at intervals between the teeth 18b, 18c.

When external voltage is applied to the FTF substrate 10, an in-plane electric field is formed between the teeth 20b, 20c and the teeth 18b, 18c, resulting in a rotation of the liquid crystal molecules 22 toward the in-plane electric field. Using the center wiring portion 20a of the common electrode 20 as the discrimination, the pixel area 24 is divided into a first sub-pixel area 241 and a second sub-pixel area 242, and the liquid crystal molecules 22a and 22b positioned adjacent to the center wiring portion 20a respectively rotate in counter-clockwise direction and in clockwise direction. In the first sub-pixel are 241, since the teeth 20b, 20c and the teeth 18b, 18c have the same herringbone-shaped sidewalls, the liquid crystal molecules 22a and 22a' positioned adjacent to the tip of the herring-bone-shaped sidewall respectively rotate in counter-clockwise direction and in clockwise direction. Therefore, two domains are formed within the first sub-pixel area 241. Similarly, the liquid crystal molecules 22b and 22b' also form two domains within the second sub-pixel area 242. Furthermore, the herringbone-shaped sidewalls lead to a specific tilted degree of the in-plane electric field which corresponds to the rotation angle of the major axes of the liquid crystal molecules 22. It is preferable that the rotation angle θ of the liquid crystal molecules satisfy the formula 0° < θ ≤ +60° or -60° ≤ θ < 0° to solve the colouring phenomenon.

However, the liquid crystal molecules 22 positioned at the peaks of the herringbone-shaped sidewall, that is, the parting of the two domains of the sub-pixel area, are jostled by the surrounding molecules 22 that rotate in a different direction, thus the liquid crystal molecules 22 on the parting of the two domains are stopped from rotating. Due to both the stopped rotation and the common electrode 20 and the pixel electrode 20 non-transparent nature, the liquid crystal molecules 22 positioned at the peaks of the herringbone-shaped sidewall present as dark lines after voltage is applied to the TFT substrate 10, as shown by dotted lines I-I and II-II. This decreases the aperture ratio of the IPS-LCD. Especially when the number of peaks of the herringbone-shaped sidewall is increased, the number of dark lines is correspondingly increased and thereby the aperture ratio is further decreased.

Figures 1 and 2 are further discussed in US 5745207, and other examples of the prior art in this field can be found in JP 07191336 and US 5905556.

### SUMMARY OF THE INVENTION

The present invention provides an electrode array structure and a method of forming the same to modify the rotation angle of the liquid crystal molecules, thus eliminating the colouring phenomenon and increasing the aperture ration of the IPS-LCD.

According to one aspect of the present invention there is provided an electrode array structure for a pixel area of an in-plane switching mode liquid crystal display, the electrode array structure comprises: a comb-shaped common electrode having a bar extending transversely and a plurality of rectangular teeth extending in a first length-wise direction from the bar; and a comb-shaped pixel electrode having a bar extending transversely and a plurality of teeth extending in a second lengthwise direction from the bar, wherein each tooth has continuous saw tooth shaped sidewalls and is disposed between and parallel to adjacent teeth of the common electrode.

According to another aspect of the present invention there is provided an electrode array structure for a pixel area of an in-plane switching mode liquid crystal display, the electrode array structure comprises: a comb-shaped common electrode having a bar extending transversely and a plurality of teeth extending in a first length-wise direction from the bar, wherein each tooth of the common electrode has continuous saw tooth shaped sidewalls; and a comb-shaped pixel electrode having a bar extending transversely and a plurality of rectangular-shaped teeth extending in a second lengthwise direction from the bar, wherein each tooth of the pixel electrode is disposed between and parallel to adjacent teeth of the common electrode.

According to another aspect of the present invention there is provided an electrode array structure for a pixel area of an in-plane switching mode liquid crystal display, the electrode array structure comprises: a comb-shaped common electrode having a bar extending transversely and a plurality of teeth extending in a first length-wise direction from the bar, wherein each tooth of the common electrode has saw tooth shaped sidewalls; and a comb-shaped pixel electrode having a bar extending transversely and a plurality of teeth extending in a second lengthwise direction from the bar, wherein each tooth has continuous saw tooth shaped sidewalls and is disposed between and parallel to adjacent teeth of the common electrode.

When the tooth of the common electrode has a rectangular profile, the tooth of the pixel electrode has a continuous saw tooth shaped sidewall which may be formed by lengthwise linking of trapezoids or inverted trapezoids.

When the tooth of the pixel electrode has a rectangular profile, the tooth of the common electrode has a continuous saw tooth shaped sidewall which may be formed by lengthwise linking of trapezoids or inverted trapezoids.

When the teeth of both the pixel electrode and the common electrode have a continuous saw tooth shaped sidewall, either the tooth of the common electrode may be formed by lengthwise linking of trapezoids and the tooth of the pixel electrode may be formed by lengthwise linking of inverted trapezoids, or the tooth of the common electrode may be formed by lengthwise linking of inverted trapezoids and the tooth of the pixel electrode may be formed by lengthwise linking of trapezoids.

These and other aspects of the present invention will become readily apparent upon further review of the following specification and drawings.

### BRIEF DESCRIPTION OF THE DRAWINGS

FIG. 1 is a top view showing the coloring image corresponding to the view angle.

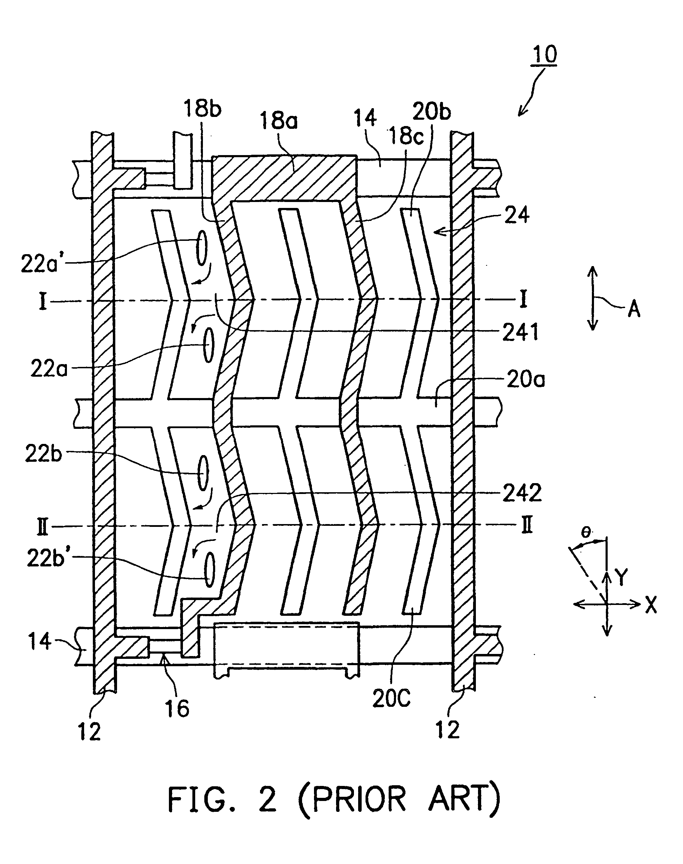

Fig.2 is a top view showing the electrode array structure of a conventional IPS-LCD.
Figs. 3A and 3B are top views showing the electrode array structure of IPS-LCD according to the first embodiment of the present invention.
Fig.4A is a top view of a TFT substrate showing the first modified design of the electrode array structure shown in Fig.3A.
Fig.4B is a top view of a TFT substrate showing the second modified design of the electrode array structure shown in Fig.3A.
Fig.4C is a top view of a TFT substrate showing the third modified design of the electrode array structure shown in Fig.3A.
Fig.4D is a top view of a TFT substrate showing the fourth modified design of the electrode array structure shown in Fig.3A.
Figs. 5A and 5B are top views showing the electrode array structure of IPS-LCD according to the second embodiment of the present invention.
Figs. 6A and 6B are top views showing the electrode array structure of IPS-LCD according to the third embodiment of the present invention.
Figs. 7A and 7B are top views showing the electrode array structure of IPS-LCD according to the fourth embodiment of the present invention.

Similar reference characters denote corresponding features consistently throughout the attached drawings.

### DETAILED DESCRIPTION OF THE PREFERRED EMBODIMENTS

### [First Embodiment]

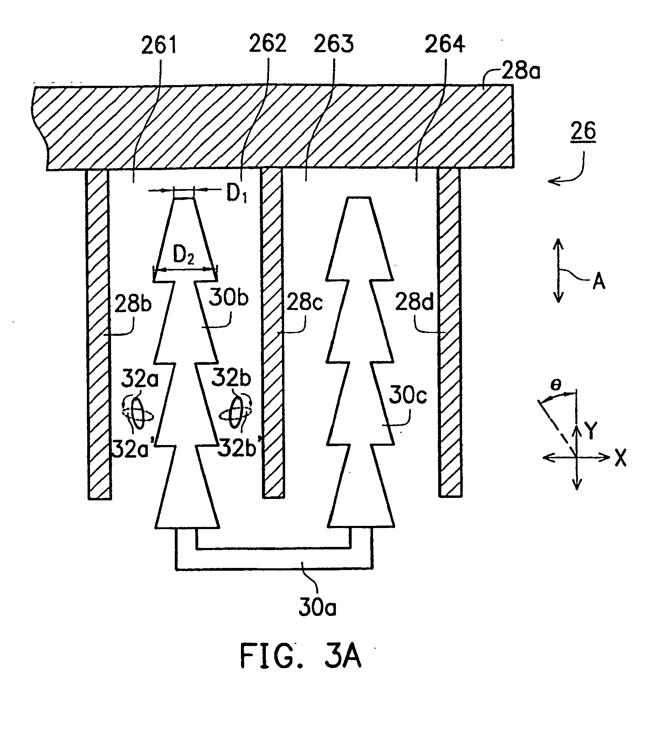

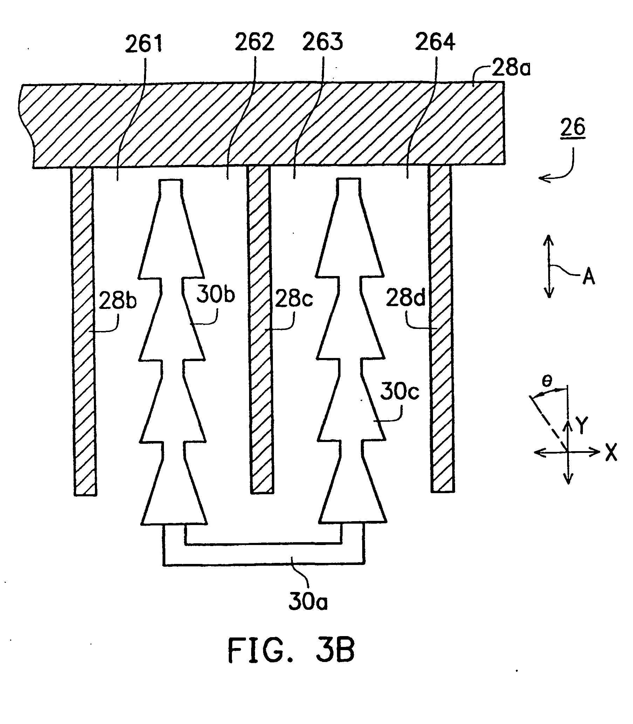

Figs. 3A and 3B are top views showing the electrode array structure of an IPS-LCD according to the first embodiment of the present invention. In a pixel area 26, a comb-shaped common electrode 28 has a bar 28a and three teeth 28b, 28c, 28d, and a comb-shaped pixel electrode 30 has a bar 30a and two teeth 30b, 30c. Since the two teeth 30b, 30c are arranged at intervals among the three teeth 28b, 28c, 28d, the pixel area 26 is divided into four sub-pixel areas 261, 262, 263, 264. As shown in Fig.3A, note that each tooth 30b, 30c of the pixel electrode 30 is formed by lengthwise linking of a plurality of specific trapezoids to present a continuous ∠-shaped sidewall, presenting a Christmas tree-like profile. The top-base length D₁ and the bottom-base length D₂ of the specific trapezoid satisfy the formula D₂ ≤ |D₁±50µm|, excluding the case that D₂=D₁.

Before a voltage is applied to the IPS-LCD, liquid crystal molecules 32 align along a rubbed direction shown by arrow A, thus the major axes of the liquid crystal molecules 22 parallel the teeth 28b, 28c, 28d of the common electrode 28. After applying the voltage to the IPS-LCD, an in-plane electric field is formed between the teeth 28b, 28c, 28d of the common electrode 28 and the teeth 30b, 30c of the pixel electrode 30, and then the liquid crystal molecules 32 rotate toward the in-plane electric field. For example, the liquid crystal molecule 32a positioned within the first sub-pixel area 261 rotates counterclockwise to become the dotted molecule 32a'. The liquid crystal molecule 32b positioned within the second sub-pixel area 262 rotate clockwise to become the dotted molecule 32b'. Thus, the tooth 30b of the pixel electrode 30 serves as a parting of two domains. Similarly, within the third sub-pixel area 263 and the fourth sub-pixel area 264, the tooth 30c of the pixel electrode 30 serves as a parting of two domains. Because the continuous ∠-shaped sidewalls lead to a specific tilted degree of the in-plane electric field which corresponds to the rotation angle of the major axes of the liquid crystal molecules 32, it is preferable that the rotation angle θ of the liquid crystal molecules 32 satisfy the formula 0°< θ ≤ +60° or -60° ≤ θ < 0° to solve the coloring phenomenon.

In addition, the liquid crystal molecules 32 positioned over the tooth 30b, 30c of the pixel electrode 30, that is the parting of the two domains, are jostled by surrounding molecules 32 that rotate in a different direction, thus the liquid crystal molecules 32 over the tooth 30b, 30c are stopped from rotating, presenting as a dark line. However, since the pixel electrode 30 is not of transparent materials, the dark lines presenting on the teeth 30b, 30c of the pixel electrode 30 do not further decrease the aperture ratio of the IPS-LCD. Moreover, if the pixel electrode 30 is made of transparent materials, the aperture ratio of the IPS-LCD can be increased.

According to the above-described electrode array structure, the profile of the teeth 30b, 30c of the pixel electrode 30 can be further modified as shown in Fig. 3B. Note that a rectangular strip is disposed between two adjacent trapezoids.

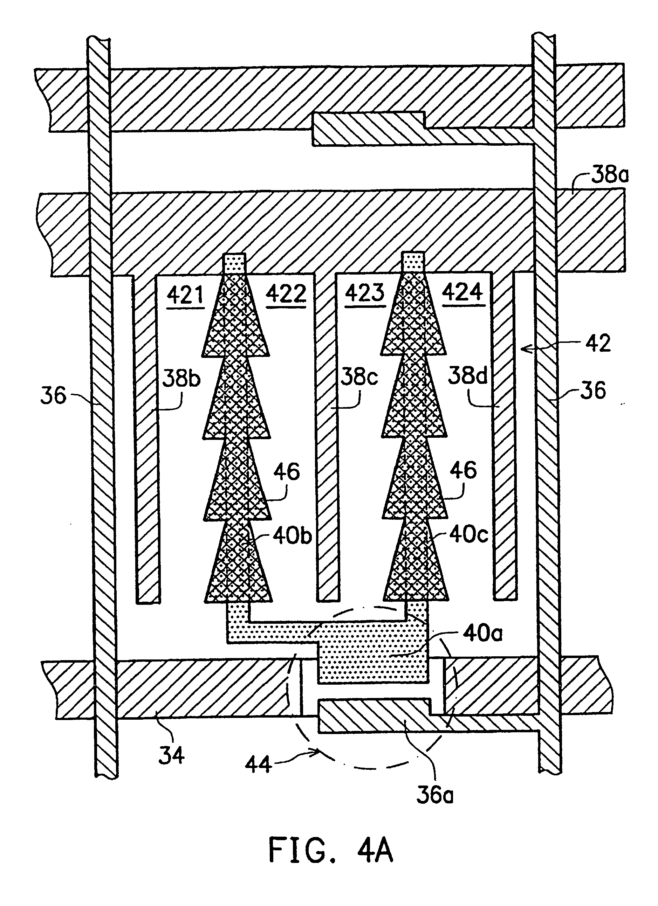

Hereinafter, the electrode array structure shown in Fig. 3A and modified designs of thereof are applied to a TFT substrate of IPS-LCD, as shown in Figs. 4A to 4D.

Fig.4A is a top view of a TFT substrate showing the first modified design of the electrode array structure shown in Fig.3A. In the first embodiment of the present invention, a TFT substrate has a plurality of parallel data lines 36 extending lengthwise and a plurality of parallel gate lines 34 extending transversely, which are arranged in a manner to form a matrix of pixel areas 42. Also, a comb-shaped common electrode 38 and a comb-shaped first pixel electrode 40 are disposed in each pixel area 42. The comb-shaped common electrode 38 has a bar 38a and three rectangular-shaped teeth 38b, 38c, 38d, and the comb-shaped first pixel electrode 40 has a bar 40a and two rectangular-shaped teeth 40b, 40c. Since the two teeth 40b, 40c appear at intervals among the three teeth 38b, 38c, 38d, the pixel area 42 is divided into four sub-pixel areas 421, 422, 423, 424. Moreover, a TFT device 44 is disposed on a predetermined area of the gate line 34, wherein a drain electrode is electrically connected to the bar 40a of the first pixel electrode 40, a source electrode is electrically connected to an extending area 36a of the data line 36, and a channel is disposed between the drain electrode and the source electrode.

In addition, a second pixel electrode 46 is formed over each rectangular-shaped tooth 40b, 40c of the first pixel electrode 40, in which a protection layer (not shown) is sandwiched between the first pixel electrode 40 and the second pixel electrode 46. The second pixel electrode 46, of indium tin oxide (ITO) or any other transparent conductive material, is formed by lengthwise linking of a plurality of specific trapezoids, presenting as a continuous ∠-shaped sidewall. The top-base length D₁ and the bottom-base length D₂ of the specific trapezoid satisfy the formula D₂ ≤ | D₁±50µm|, excluding the case that D₂=D₁. Because the continuous ∠-shaped sidewalls lead to a specific tilted degree of the in-plane electric field which corresponds to the rotation angle of the major axes of the liquid crystal molecules, the rotation angle of the liquid crystal molecules is perfectly controlled to solve the coloring phenomenon. Also, since the first pixel electrode 40 is not of transparent materials, the dark lines presenting on the teeth 40b, 40c of the first pixel electrode 40 do not further decrease the aperture ratio of the IPS-LCD. Moreover, the second pixel electrode 46 is of transparent materials, so the aperture ratio of the IPS-LCD can be increased.

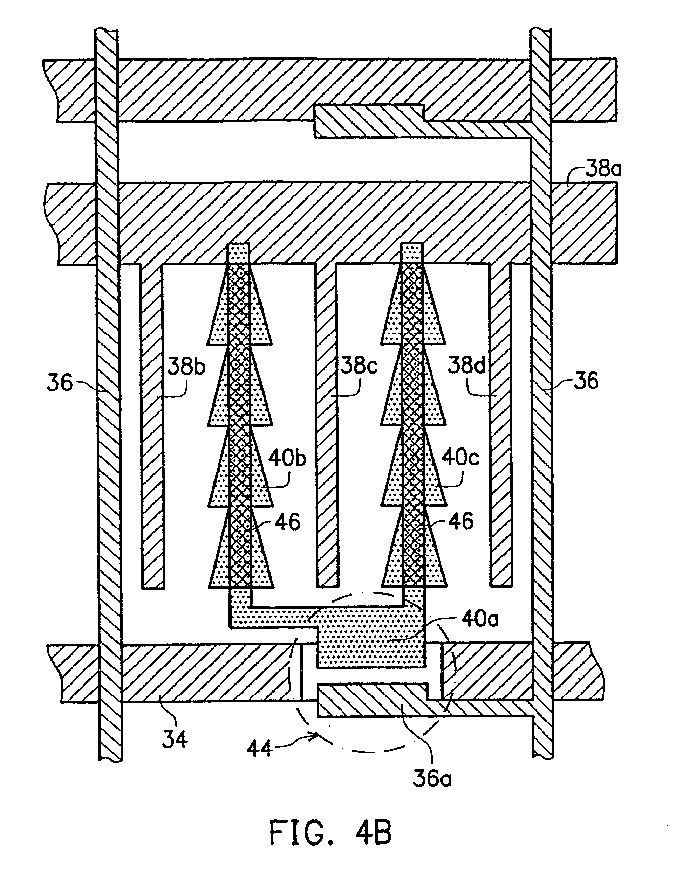

Fig.4B is a top view of a TFT substrate showing the second modified design of the electrode array structure shown in Fig.3A. Compared with the electrode array structure shown in Fig.4A, in the second modified design shown in Fig.4B, the pattern of the tooth 40b, 40c of the first pixel electrode 40 and the pattern of the second electrode 46 are exchanged. Thus, the tooth 40b, 40c of the first pixel electrode 40 is formed by lengthwise linking of the specific trapezoids to create a continuous ∠-shaped sidewall, and the second electrode 46 is formed to be a rectangular strip. This also achieves the aims of eliminating the coloring phenomenon and increasing the aperture ratio.

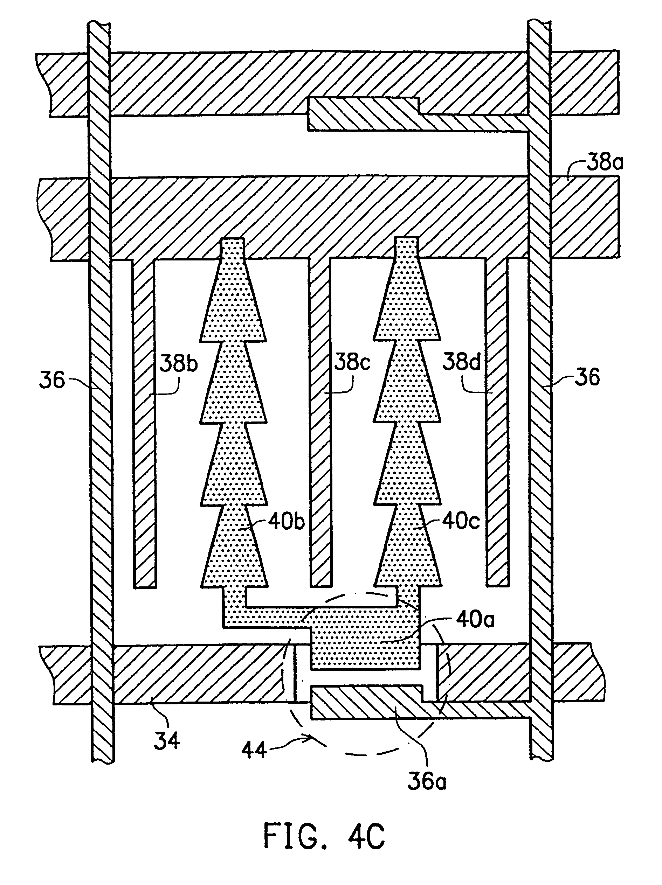

Fig.4C is a top view of a TFT substrate showing the third modified design of the electrode array structure shown in Fig.3A. Compared with the electrode array structure shown in Fig.4B, in the third modified design shown in Fig.4C, the fabrication of the second electrode 46 is omitted. Thus, only the tooth 40b, 40c of the first pixel electrode 40 is formed to present the continuous ∠-shaped sidewall. This not only achieves the aim of eliminating the coloring phenomenon, but also decreases manufacturing complexity and production costs.

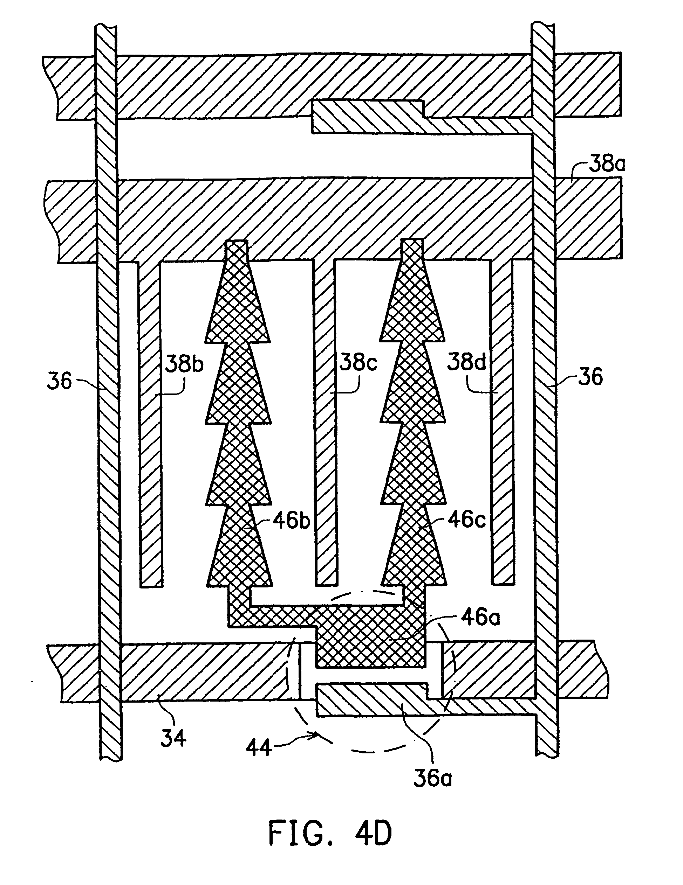

Fig.4D is a top view of a TFT substrate showing the fourth modified design of the electrode array structure shown in Fig.3A. Although the electrode array structure shown in Fig.4C can further decrease manufacturing complexity and production costs, the first pixel electrode 40 of opaque materials occupies more areas when the tooth 40b, 40c forms the Christmas tree-like-like profile, thus the problem of decreasing the aperture ratio is encountered. Seeking to solve this problem, in the fourth modified design shown in Fig.4D, the fabrication of the first pixel electrode 40 is omitted, and the pattern of the second pixel 46 is formed the same as the pattern of the first pixel electrode 40 shown in Fig.4C. Therefore, the second electrode 46 has a bar 46a, two teeth 46b, 46c with continuous ∠-shaped sidewalls. This not only achieves the aims of eliminating the coloring phenomenon and decreasing manufacturing complexity and production costs, but also further increases the aperture ratio of the IPS-LCD.

### [Second Embodiment]

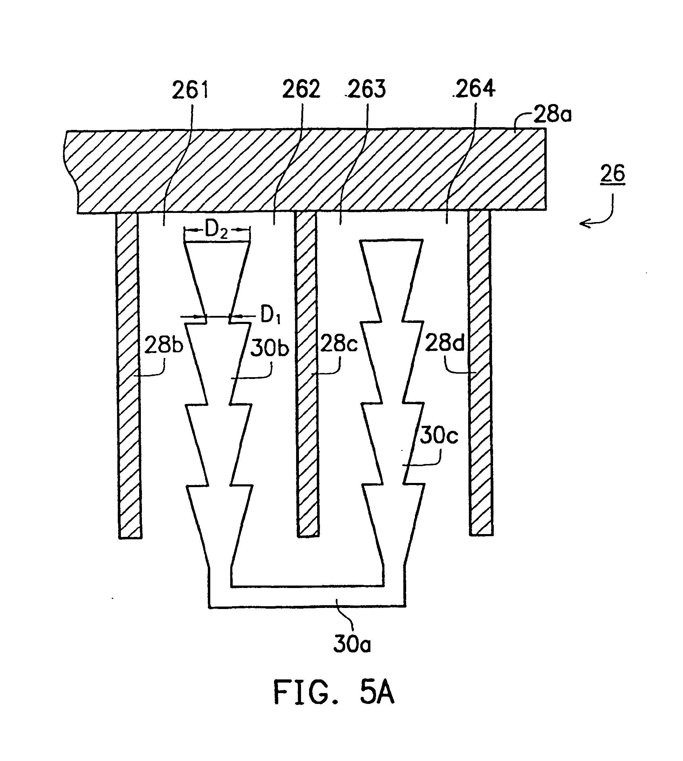

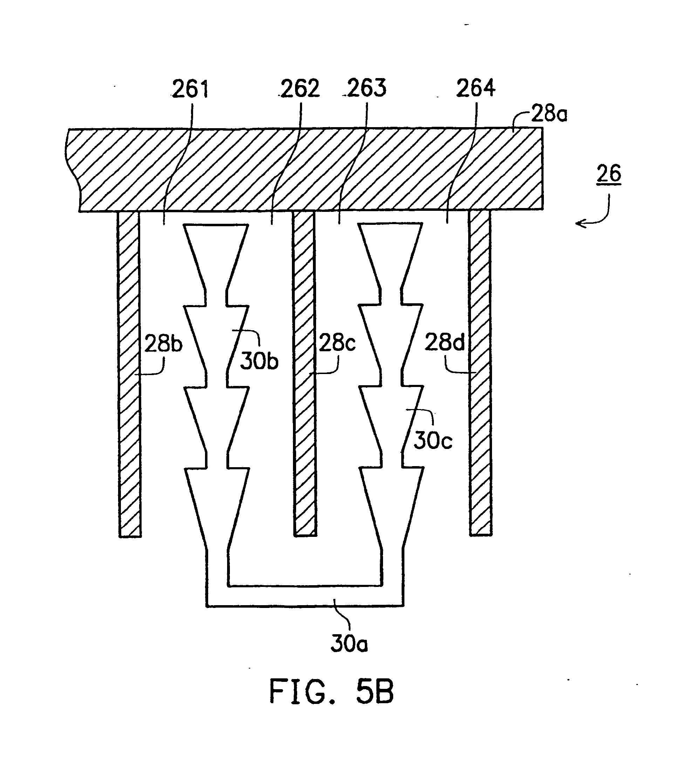

Figs. 5A and 5B are top views showing the electrode array structure of IPS-LCD according to the second embodiment of the present invention. In the pixel area 26, the electrode array structure shown in Fig.5A is almost the same as the electrode array structure shown in Fig.3A except with respect to the tooth 30b, 30c of the pixel electrode 30. In the second embodiment, as shown in Fig.5A, note that each tooth 30b, 30c of the pixel electrode 30 is formed by lengthwise linking of a plurality of inverted trapezoids, presenting an inverted Christmas tree-like-like profile. The length D₁ and the length D₂ of the inverted trapezoid satisfy the formula D₂≤ |D₁±50µm|, excluding the case that D₂=D₁. This achieves the aims of eliminating the coloring phenomenon and increasing the aperture ratio. Also, as shown in Fig.5B, the profile of the tooth 30b, 30c of the pixel electrode 30 can be modified, in which a rectangular strip is disposed between two adjacent inverted trapezoids. Furthermore, according to the four modified designs shown in Figs.4A to 4D, the tooth 30b, 30c of the pixel electrode 30 can be formed by appropriately arranging the first electrode layer and the second electrode layer.

### [Third Embodiment]

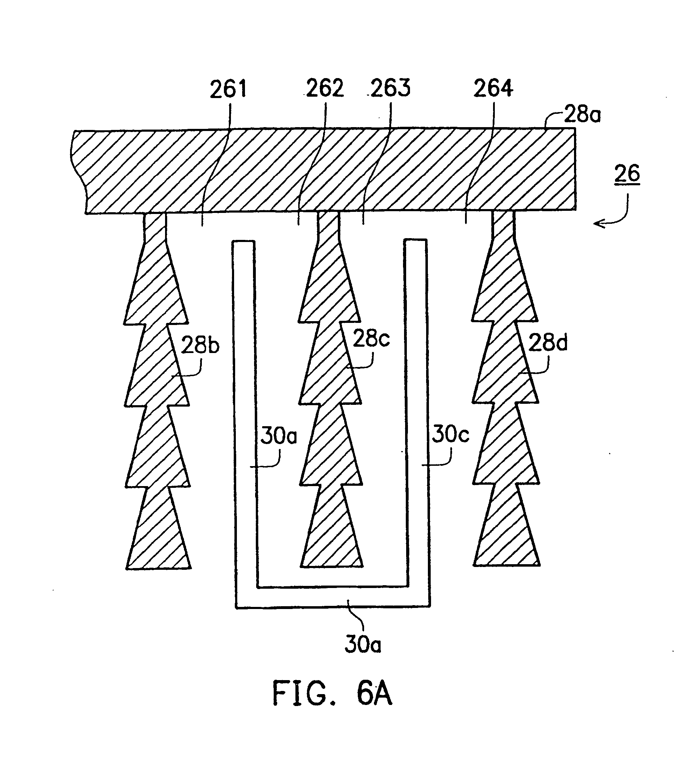

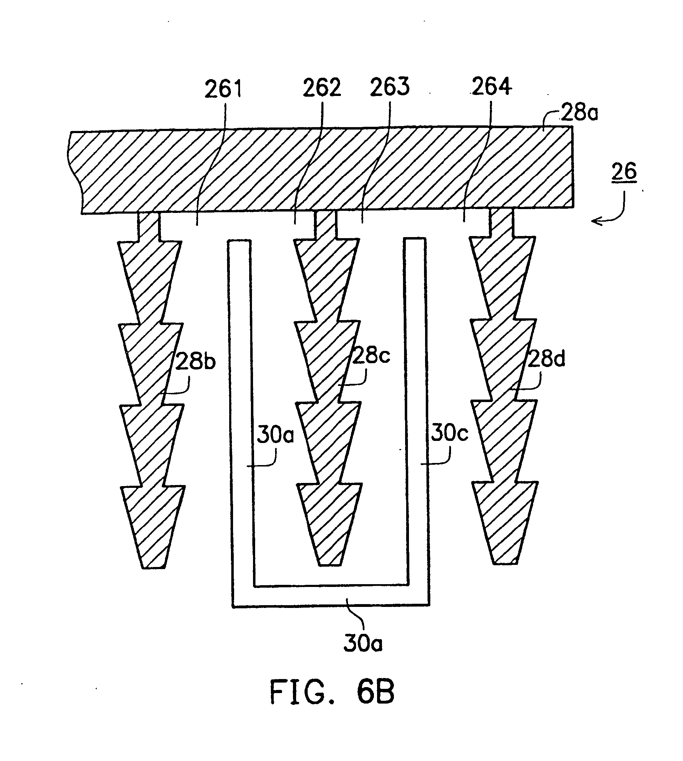

Figs. 6A and 6B are top views showing the electrode array structure of an IPS-LCD according to the third embodiment of the present invention. Compared with the electrode array structure of the first embodiment shown in Fig.3A, in the pixel area 26 of the third embodiment, the pattern of the tooth 28b, 28c, 28d of the common electrode 28 and the pattern of the tooth 30b, 30c of the pixel electrode 30 are exchanged. Thus, the tooth 28b, 28c, 28d of the common electrode 28 is formed by lengthwise linking of specific trapezoids to present a continuous ∠-shaped sidewall, and the tooth 30b, 30c of the electrode 30 is formed as a rectangular strip. This achieves the aims of eliminating the coloring phenomenon and increasing the aperture ratio. Also, the profile of the tooth 28b, 28c, 28d of the common electrode 28 can be modified, in which a rectangular strip is disposed between two adjacent trapezoids. Moreover, as shown in Fig.6B, the profile of the tooth 28b, 28c, 28d of the common electrode 28 can be modified to present an inverted Christmas tree-like-like profile, wherein inverted trapezoids are lengthwise linked to form the tooth 28b, 28c, 28d. Furthermore, according to the four modified designs shown in Figs.4A to 4D, the tooth 28b, 28c, 28d of the common electrode 28 can be formed by appropriately arranging the first electrode layer and the second electrode layer.

### [Fourth Embodiment]

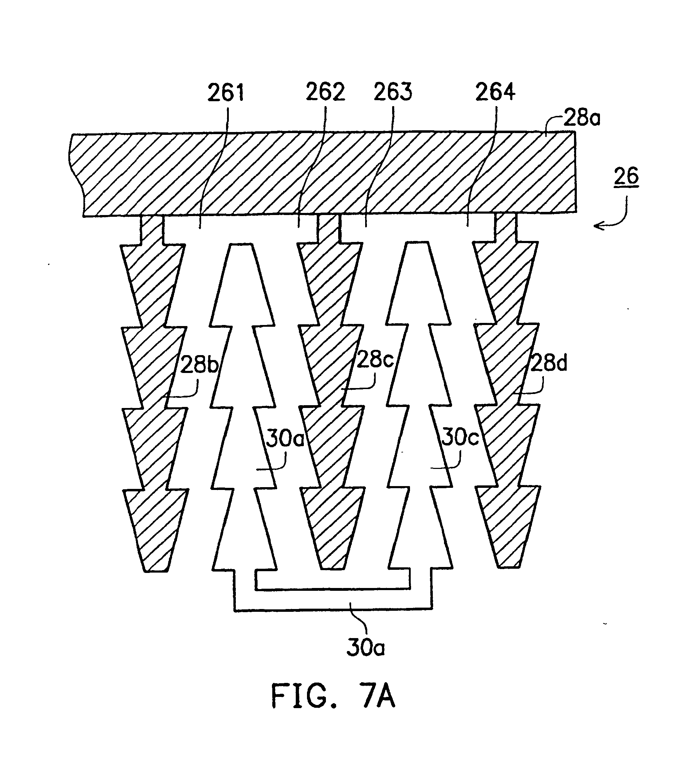

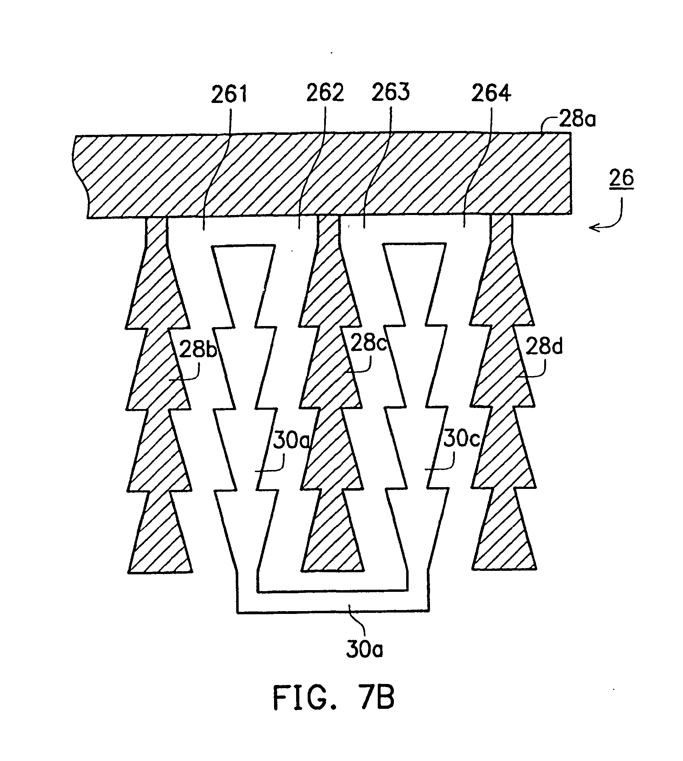

Figs. 7A and 7B are top views showing the electrode array structure of IPS-LCD according to the fourth embodiment of the present invention. In the pixel area 26 of the fourth embodiment, the electrode array structure is an integration of the first embodiment, the second embodiment and the third embodiment. As shown in Fig. 7A, when the pattern of the tooth 28b, 28c, 28d of the common electrode 28 is formed to present an inverted Christmas tree-like profile, the pattern of the tooth 30b, 30c of the pixel electrode 30 is formed to present a Christmas tree-like profile. Alternatively, as shown in Fig.7B, when the pattern of the tooth 28b, 28c, 28d of the common electrode 28 is formed to present a Christmas tree-like profile, the pattern of the tooth 30b, 30c of the pixel electrode 30 is formed to present an inverted Christmas tree-like profile. This achieves the aims of eliminating the coloring phenomenon and increasing the aperture ratio.

Also, the profile of the tooth 28b, 28c, 28d of the common electrode 28 and the tooth 30b, 30c of the pixel electrode 30 can be modified, in which a rectangular strip is disposed between two adjacent trapezoids. Moreover, according to the four modified designs shown in Figs.4A to 4D, the tooth 28b, 28c, 28d of the common electrode 28 and the tooth 30b, 30c of the pixel electrode 30 can be formed by appropriately arranging the first electrode layer and the second electrode layer.

It is to be understood that the present invention is not limited to the embodiments described above, but encompasses any and all embodiments within the scope of the following claims.

## Claims

1. An electrode array structure for a pixel area of an in-plane switching mode liquid crystal display, the electrode array structure comprises:
a comb-shaped common electrode having a bar (28a) extending transversely and a plurality of rectangular teeth (28b, 28c, 28d) extending in a first length-wise direction from the bar; and
a comb-shaped pixel electrode having a bar (30a) extending transversely and a plurality of teeth (30b, 30c) extending in a second lengthwise direction from the bar; **characterised in that** each tooth of said pixel electrode has continuous saw tooth shaped sidewalls and is disposed between and parallel to adjacent teeth of the common electrode.

2. The electrode array structure according to claim 1, wherein each tooth of the pixel electrode is formed by lengthwise linking of a plurality of trapezoids.

3. The electrode array structure according to claim 2, wherein a short-based length D₁ and a long-based length D₂ of the trapezoid satisfy the formula *D*₂ ≤ |*D*₁ ± 50µ*m*|, excluding the case that D₂=D₁.

4. The electrode array structure according to claim 2, wherein two adjacent trapezoids are connected by a rectangular strip.

5. The electrode array structure according to claim 1, wherein each tooth of the pixel electrode is formed by lengthwise linking of a plurality of inverted trapezoids.

6. The electrode array structure according to claim 5, wherein a short-based length D₁ and a long-based length D₂ of the inverted trapezoids satisfy the formula *D*₂ ≤ |*D*₁ ± 50µ*m*|, excluding the case that D₂=D₁.

7. The electrode array structure according to claim 5, wherein two adjacent trapezoids are connected by a rectangular strip.

8. The electrode array structure according to claim 1, wherein each tooth of the pixel electrode is indium tin oxide.

9. The electrode array structure according to claim 1, wherein each tooth of the pixel electrode comprises:
a first electrode layer having a rectangular profile;
a second electrode layer disposed over the first electrode layer and having continuous saw tooth shaped sidewalls; and
a protection layer sandwiched between the first electrode layer and the second electrode layer.

10. The electrode array structure according to claim 9, wherein the second electrode layer is indium tin oxide.

11. The electrode array structure according to claim 1, wherein each tooth of the pixel electrode comprises:
a first electrode layer having continuous saw tooth shaped sidewalls;
a second electrode layer disposed over the first electrode layer and having a rectangular profile; and
a protection layer sandwiched between the first electrode layer and the second electrode layer.

12. The electrode array structure according to claim 11, wherein the second electrode layer is indium tin oxide.

13. An electrode array structure for a pixel area of an in-plane switching mode liquid crystal display, the electrode array structure comprises:
a comb-shaped common electrode having a bar (28a) extending transversely and a plurality of teeth (28a, 28b, 28c) extending in a first length-wise direction from the bar; and
a comb-shaped pixel electrode having a bar (30a) extending transversely and a plurality of rectangular-shaped teeth (30a, 30b) extending in a second lengthwise direction from the bar, wherein each tooth of the pixel electrode is disposed between and parallel to adjacent teeth of the common electrode, **characterised in that** each tooth of the common electrode has continuous saw tooth shaped sidewalls.

14. The electrode array structure according to claim 13, wherein each tooth of the common electrode is formed by lengthwise linking of a plurality of trapezoids.

15. The electrode array structure according to claim 14, wherein a short-based length D₁ and a long-based length D₂ of the trapezoid satisfy the formula *D*₂ ≤ |*D*₁ ± 50µ*m*|, excluding the case that D₂=D₁.

16. The electrode array structure according to claim 14, wherein two adjacent trapezoids are connected by a rectangular strip.

17. The electrode array structure according to claim 13, wherein each tooth of the common electrode is formed by lengthwise linking of a plurality of inverted trapezoids.

18. The electrode array structure according to claim 17, wherein a short-based length D₁ and a long-based length D₂ of the inverted trapezoids satisfy the formula *D*₂ ≤ |*D*₁ ± 50µ*m*|, excluding the case that D₂=D₁.

19. The electrode array structure according to claim 17, wherein two adjacent inverted trapezoids are connected by a rectangular strip.

20. The electrode array structure according to claim 13, wherein each tooth of the pixel electrode is indium tin oxide.

21. The electrode array structure according to claim 13, wherein each tooth of the pixel electrode comprises:
a first electrode layer having a rectangular profile;
a second electrode layer disposed over the first electrode layer and having continuous saw tooth shaped sidewalls; and
a protection layer sandwiched between the first electrode layer and the second electrode layer.

22. The electrode array structure according to claim 21, wherein the second electrode layer is indium tin oxide.

23. The electrode array structure according to claim 13, wherein each tooth of the pixel electrode comprises:
a first electrode layer having continuous saw tooth shaped sidewalls;
a second electrode layer disposed over the first electrode layer and having a rectangular profile; and
a protection layer sandwiched between the first electrode layer and the second electrode layer.

24. The electrode array structure according to claim 23, wherein the second electrode layer is indium tin oxide.

25. An electrode array structure for a pixel area of an in-plane switching mode liquid crystal display, the electrode array structure comprises:
a comb-shaped common electrode having a bar (28a) extending transversely and a plurality of teeth (28a, 28b, 28c) extending in a first length-wise direction from the bar; and
a comb-shaped pixel electrode having a bar (30a) extending transversely and a plurality of teeth (30a, 30b) extending in a second lengthwise direction from the bar; **characterised in that** each tooth of said pixel electrode has continuous saw tooth shaped sidewalls and is disposed between and parallel to adjacent teeth of the common electrode, and each tooth of the common electrode has saw tooth shaped sidewalls.

26. The electrode array structure according to claim 25, wherein each tooth of the common electrode is formed by lengthwise linking of a plurality of trapezoids, and each tooth of the pixel electrode is formed by length-wise linking of a plurality of inverted trapezoids.

27. The electrode array structure according to claim 26, wherein a short-based length D₁ and a long-based length D₂ of the trapezoid satisfy the formula *D*₂ ≤ |*D*₁ ± 50µ*m*|, excluding the case that D₂=D₁.

28. The electrode array structure according to claim 26, wherein two adjacent trapezoids are connected by a rectangular strip, and two adjacent inverted trapezoids are connected by a rectangular strip.

29. The electrode array structure according to claim 25, wherein each tooth of the common electrode is formed by lengthwise linking of a plurality of inverted trapezoids, and each tooth of the pixel electrode is formed by lengthwise linking of a plurality of trapezoids.

30. The electrode array structure according to claim 29, wherein a short-based length D₁ and a long-based length D₂ of the inverted trapezoids satisfy the formula *D*₂ ≤ |*D*₁ ± 50*µm*|, excluding the case that D₂=D₁.

31. The electrode array structure according to 29, wherein two adjacent trapezoids are connected by a rectangular strip, and two adjacent inverted trapezoids are connected by a rectangular strip.

32. The electrode array structure according to claim 25, wherein each tooth of the common electrode is indium tin oxide.

33. The electrode array structure according to claim 25, wherein each tooth of the pixel electrode is indium tin oxide.

## Patentansprüche

1. Elektrodenanordnungsstruktur für einen Pixelbereich einer in einer Ebene schaltenden Flüssigkristallanzeige, wobei die Elektrodenanordnungsstruktur umfasst:
eine kammförmige Massenelektrode, die einen quer verlaufenden Balken (28a) aufweist und zahlreiche rechteckige Zähne (28b, 28c, 28d), die sich von dem Balken in einer ersten Längsrichtung erstrecken; und
eine kammförmige Pixelelektrode, die einen quer verlaufenden Balken (30a) hat und zahlreiche Zähne (30b, 30c), die sich von dem Balken in einer zweiten Längsrichtung erstrecken; **dadurch gekennzeichnet, dass** jeder Zahn der Pixelelektrode fortlaufend sägezahnförmige Seitenwände besitzt und zwischen benachbarten Zähnen der Massenelektrode und parallel dazu angeordnet ist.

2. Elektrodenanordnungsstruktur nach Anspruch 1, wobei jeder Zahn der Pixelelektrode **dadurch** ausgebildet wird, dass man in Längsrichtung zahlreiche Trapeze miteinander verbindet.

3. Elektrodenanordnungsstruktur nach Anspruch 2, wobei die Länge der kurzen Grundlinie D₁ und die Länge der langen Grundlinie D₂ des Trapezes der Formel D₂ ≤| D₁ ± 50 µ*m*| genügen, und der Fall D₂ = D₁ ausgeschlossen ist.

4. Elektrodenanordnungsstruktur nach Anspruch 2, wobei zwei benachbarte Trapeze durch einen rechteckigen Streifen verbunden sind.

5. Elektrodenanordnungsstruktur nach Anspruch 1, wobei jeder Zahn der Pixelelektrode **dadurch** gebildet wird, dass man in Längsrichtung zahlreiche invertierte Trapeze miteinander verbindet.

6. Elektrodenanordnungsstruktur nach Anspruch 5, wobei die Länge der kurzen Grundlinie D₁ und die Länge der langen Grundlinie D₂ der invertierten Trapeze der Formel D₂ ≤ | D₁ ± 50 µ*m*| genügen, und der Fall D₂ = D₁ ausgeschlossen ist.

7. Elektrodenanordnungsstruktur nach Anspruch 5, wobei zwei benachbarte Trapeze durch einen rechteckigen Streifen verbunden sind.

8. Elektrodenanordnungsstruktur nach Anspruch 1, wobei jeder Zahn der Pixelelektrode aus Indium-Zinn-Oxid besteht.

9. Elektrodenanordnungsstruktur nach Anspruch 1, wobei jeder Zahn der Pixelelektrode umfasst:
eine erste Elektrodenschicht, die ein rechteckiges Profil hat;
eine zweite Elektrodenschicht, die über der ersten Elektrodenschicht angeordnet ist und fortlaufend sägezahnförmige Seitenwände aufweist; und
eine Schutzschicht, die zwischen der ersten Elektrodenschicht und der zweiten Elektrodenschicht liegt.

10. Elektrodenanordnungsstruktur nach Anspruch 9, wobei die zweite Elektrodenschicht aus Indium-Zinn-Oxid besteht.

11. Elektrodenanordnungsstruktur nach Anspruch 1, wobei jeder Zahn der Pixelelektrode umfasst:
eine erste Elektrodenschicht, die fortlaufend sägezahnförmige Seitenwände besitzt;
eine zweite Elektrodenschicht, die über der ersten Elektrodenschicht angeordnet ist und ein rechteckiges Profil hat; und
eine Schutzschicht, die zwischen der ersten Elektrodenschicht und der zweiten Elektrodenschicht liegt.

12. Elektrodenanordnungsstruktur nach Anspruch 11, wobei die zweite Elektrodenschicht aus Indium-Zinn-Oxid besteht.

13. Elektrodenanordnungsstruktur für einen Pixelbereich einer in einer Ebene schaltenden Flüssigkristallanzeige, wobei die Elektrodenanordnungsstruktur umfasst:
eine kammförmige Massenelektrode, die einen quer verlaufenden Balken (28a) aufweist und zahlreiche Zähne (28d, 28b, 28c), die sich von dem Balken in einer ersten Längsrichtung erstrecken; und
eine kammförmige Pixelelektrode, die einen quer verlaufenden Balken (30a) hat und zahlreiche rechteckige Zähne (30c, 30b), die sich von dem Balken in einer zweiten Längsrichtung erstrecken, wobei jeder Zahn der Pixelelektrode zwischen benachbarten Zähnen der Massenelektrode und parallel dazu angeordnet ist, **dadurch gekennzeichnet, dass** jeder Zahn der Massenelektrode fortlaufend sägezahnförmige Seitenwände besitzt.

14. Elektrodenanordnungsstruktur nach Anspruch 13, wobei jeder Zahn der Massenelektrode **dadurch** ausgebildet wird, dass man in Längsrichtung zahlreiche Trapeze miteinander verbindet.

15. Elektrodenanordnungsstruktur nach Anspruch 14, wobei die Länge der kurzen Grundlinie D₁ und die Länge der langen Grundlinie D₂ des Trapezes der Formel D₂ ≤ |D₁ ± 50 µ*m*| genügen, und der Fall D₂ = D₁ ausgeschlossen ist.

16. Elektrodenanordnungsstruktur nach Anspruch 14, wobei zwei benachbarte Trapeze durch einen rechteckigen Streifen verbunden sind.

17. Elektrodenanordnungsstruktur nach Anspruch 13, wobei jeder Zahn der Massenelektrode **dadurch** gebildet wird, dass man zahlreiche invertierte Trapeze in Längsrichtung miteinander verbindet.

18. Elektrodenanordnungsstruktur nach Anspruch 17, wobei die Länge der kurzen Grundlinie D₁ und die Länge der langen Grundlinie D₂ der invertierten Trapeze der Formel D₂ ≤ |D₁ ± 50 µ*m*| genügen, und der Fall D₂ = D₁ ausgeschlossen ist.

19. Elektrodenanordnungsstruktur nach Anspruch 17, wobei zwei benachbarte invertierte Trapeze durch einen rechteckigen Streifen verbunden sind.

20. Elektrodenanordnungsstruktur nach Anspruch 13, wobei jeder Zahn der Pixelelektrode aus Indium-Zinn-Oxid besteht.

21. Elektrodenanordnungsstruktur nach Anspruch 13, wobei jeder Zahn der Pixelelektrode umfasst:
eine erste Elektrodenschicht, die ein rechteckiges Profil hat;
eine zweite Elektrodenschicht, die über der ersten Elektrodenschicht angeordnet ist und fortlaufend sägezahnförmige Seitenwände aufweist; und
eine Schutzschicht, die zwischen der ersten Elektrodenschicht und der zweiten Elektrodenschicht liegt.

22. Elektrodenanordnungsstruktur nach Anspruch 21, wobei die zweite Elektrodenschicht aus Indium-Zinn-Oxid besteht.

23. Elektrodenanordnungsstruktur nach Anspruch 13, wobei jeder Zahn der Pixelelektrode umfasst:
eine erste Elektrodenschicht, die fortlaufend sägezahnförmige Seitenwände aufweist;
eine zweite Elektrodenschicht, die über der ersten Elektrodenschicht angeordnet ist und ein rechteckiges Profil hat;
eine Schutzschicht, die zwischen der ersten Elektrodenschicht und der zweiten Elektrodenschicht liegt.

24. Elektrodenanordnungsstruktur nach Anspruch 23, wobei die zweite Elektrodenschicht aus Indium-Zinn-Oxid besteht.

25. Elektrodenanordnungsstruktur für einen Pixelbereich einer in einer Ebene schaltenden Flüssigkristallanzeige, wobei die Elektrodenanordnungsstruktur umfasst:
eine kammförmige Massenelektrode, die einen quer verlaufenden Balken (28a) aufweist und zahlreiche Zähne (28d, 28b, 28c), die sich von dem Balken in einer ersten Längsrichtung erstrecken; und
eine kammförmige Pixelelektrode, die einen quer verlaufenden Balken (30a) hat und zahlreiche Zähne (30c, 30b), die sich von dem Balken in einer zweiten Längsrichtung erstrecken, **dadurch gekennzeichnet, dass** jeder Zahn der Pixelelektrode fortlaufend sägezahnförmige Seitenwände besitzt und zwischen benachbarten Zähnen der Massenelektrode und parallel dazu angeordnet ist, und dass jeder Zahn der Massenelektrode sägezahnförmige Seitenwände besitzt.

26. Elektrodenanordnungsstruktur nach Anspruch 25, wobei jeder Zahn der Massenelektrode **dadurch** ausgebildet wird, dass man in Längsrichtung zahlreiche Trapeze miteinander verbindet, und jeder Zahn der Pixelelektrode **dadurch** ausgebildet wird, dass man in Längsrichtung zahlreiche invertierte Trapeze miteinander verbindet.

27. Elektrodenanordnungsstruktur nach Anspruch 26, wobei die Länge der kurzen Grundlinie D₁ und die Länge der langen Grundlinie D₂ des Trapezes der Formel D₂ ≤ |D₁ ± 50 µ*m*| genügen, und der Fall D₂ = D₁ ausgeschlossen ist.

28. Elektrodenanordnungsstruktur nach Anspruch 26, wobei zwei benachbarte Trapeze durch einen rechteckigen Streifen verbunden sind, und zwei benachbarte invertierte Trapeze durch einen rechteckigen Streifen verbunden sind.

29. Elektrodenanordnungsstruktur nach Anspruch 25, wobei jeder Zahn der Massenelektrode **dadurch** ausgebildet wird, dass man in Längsrichtung zahlreiche invertierte Trapeze miteinander verbindet, und jeder Zahn der Pixelelektrode **dadurch** ausgebildet wird, dass man in Längsrichtung zahlreiche Trapeze miteinander verbindet.

30. Elektrodenanordnungsstruktur nach Anspruch 29, wobei die Länge der kurzen Grundlinie D₁ und die Länge der langen Grundlinie D₂ der invertierten Trapeze der Formel D₂ ≤ |D₁ ± 50 µ*m*| genügen, und der Fall D₂ = D₁ ausgeschlossen ist.

31. Elektrodenanordnungsstruktur nach Anspruch 29, wobei zwei benachbarte Trapeze durch einen rechteckigen Streifen verbunden sind, und zwei benachbarte invertierte Trapeze durch einen rechteckigen Streifen verbunden sind.

32. Elektrodenanordnungsstruktur nach Anspruch 25, wobei jeder Zahn der Massenelektrode aus Indium-Zinn-Oxid besteht.

33. Elektrodenanordnungsstruktur nach Anspruch 25, wobei jeder Zahn der Pixelelektrode aus Indium-Zinn-Oxid besteht.

## Revendications

1. Structure à groupement d'électrodes destinée à une zone de pixels d'un affichage à cristaux liquides à mode de commutation en plan, la structure à groupement d'électrodes comporte :
une électrode commune en forme de peigne ayant une barre (28a) se prolongeant transversalement et une pluralité de dents (28b, 28c, 28d) rectangulaires se prolongeant dans une première direction dans le sens de la longueur à partir de la barre ; et
une électrode de pixel en forme de peigne ayant une barre (30a) se prolongeant transversalement et une pluralité de dents (30b, 30c) se prolongeant dans une deuxième direction dans le sens de la longueur à partir de la barre ; **caractérisée en ce que** chaque dent de ladite électrode de pixel possède des parois latérales formées en dents de scie continues et est disposée entre des dents adjacentes de l'électrode commune et de façon parallèle à celles-ci.

2. Structure à groupement d'électrodes selon la revendication 1, dans laquelle chaque dent de l'électrode de pixel est formée par une liaison dans le sens de la longueur d'une pluralité de trapèzes.

3. Structure à groupement d'électrodes selon la revendication 2, dans laquelle une longueur de petite base D₁ et une longueur de grande base D₂ du trapèze satisfont la formule *D*_{*2*} ≤ |D_{*1*} ± 50 µm|, à l'exclusion du cas où D₂ = D₁.

4. Structure à groupement d'électrodes selon la revendication 2, dans laquelle deux trapèzes adjacents sont reliés par une bande rectangulaire.

5. Structure à groupement d'électrodes selon la revendication 1, dans laquelle chaque dent de l'électrode de pixel est formée par une liaison dans le sens de la longueur d'une pluralité de trapèzes inversés.

6. Structure à groupement d'électrodes selon la revendication 5, dans laquelle une longueur de petite base D₁ et une longueur de grande base D₂ des trapèzes inversés satisfont la formule *D*_{*2*} ≤ |*D*_{*1*} ± 50 µ*m*|, à l'exclusion du cas où D₂ = D₁.

7. Structure à groupement d'électrodes selon la revendication 5, dans laquelle deux trapèzes adjacents sont reliés par une bande rectangulaire.

8. Structure à groupement d'électrodes selon la revendication 1, dans laquelle chaque dent de l'électrode de pixel est en oxyde d'indium et d'étain.

9. Structure à groupement d'électrodes selon la revendication 1, dans laquelle chaque dent de l'électrode de pixel comporte :
une première couche d'électrode ayant un profil rectangulaire ;
une deuxième couche d'électrode disposée sur la première couche d'électrode et ayant des parois latérales formées en dents de scie continues ; et
une couche de protection disposée en sandwich entre la première couche d'électrode et la deuxième couche d'électrode.

10. Structure à groupement d'électrodes selon la revendication 9, dans laquelle la deuxième couche d'électrode est en oxyde d'indium et d'étain.

11. Structure à groupement d'électrodes selon la revendication 1, dans laquelle chaque dent de l'électrode de pixel comporte :
une première couche d'électrode ayant des parois latérales formées en dents de scie continues ;
une deuxième couche d'électrode disposée sur la première couche d'électrode et ayant un profil rectangulaire ; et
une couche de protection disposée en sandwich entre la première couche d'électrode et la deuxième couche d'électrode.

12. Structure à groupement d'électrodes selon la revendication 11, dans laquelle la deuxième couche d'électrode est en oxyde d'indium et d'étain.

13. Structure à groupement d'électrodes destinée à une zone de pixels d'un affichage à cristaux liquides à mode de commutation en plan, la structure à groupement d'électrodes comporte :
une électrode commune en forme de peigne ayant une barre (28a) se prolongeant transversalement et une pluralité de dents (28d, 28b, 28c) se prolongeant dans une première direction dans le sens de la longueur à partir de la barre, et
une électrode de pixel en forme de peigne ayant une barre (30a) se prolongeant transversalement et une pluralité de dents (30c, 30b) de forme rectangulaire se prolongeant dans une deuxième direction dans le sens de la longueur à partir de la barre, où chaque dent de l'électrode de pixel est disposée entre des dents adjacentes de l'électrode commune et de façon parallèle à celles-ci, **caractérisée en ce que** chaque dent de l'électrode commune possède des parois latérales formées en dents de scie continues.

14. Structure à groupement d'électrodes selon la revendication 13, dans laquelle chaque dent de l'électrode commune est formée par une liaison dans le sens de la longueur d'une pluralité de trapèzes.

15. Structure à groupement d'électrodes selon la revendication 14, dans laquelle une longueur de petite base D₁ et une longueur de grande base D₂ du trapèze satisfont la formule *D*_{*2*} ≤ |*D*_{*1*} ± 50 µ*m*|, à l'exclusion du cas où D₂ = D₁.

16. Structure à groupement d'électrodes selon la revendication 14, dans laquelle deux trapèzes adjacents sont reliés par une bande rectangulaire.

17. Structure à groupement d'électrodes selon la revendication 13, dans laquelle chaque dent de l'électrode commune est formée par une liaison dans le sens de la longueur d'une pluralité de trapèzes inversés.

18. Structure à groupement d'électrodes selon la revendication 17, dans laquelle une longueur de petite base D₁ et une longueur de grande base D₂ des trapèzes inversés satisfont la formule *D*_{*2*} ≤ |D_{*1*} ± 50 µ*m*|, à l'exclusion du cas où D₂ = D₁.

19. Structure à groupement d'électrodes selon la revendication 17, dans laquelle deux trapèzes inversés adjacents sont reliés par une bande rectangulaire.

20. Structure à groupement d'électrodes selon la revendication 13, dans laquelle chaque dent de l'électrode de pixel est en oxyde d'indium et d'étain.

21. Structure à groupement d'électrodes selon la revendication 13, dans laquelle chaque dent de l'électrode de pixel comporte :
une première couche d'électrode ayant un profil rectangulaire ;
une deuxième couche d'électrode disposée sur la première couche d'électrode et ayant des parois latérales formées en dents de scie continues ; et
une couche de protection disposée en sandwich entre la première couche d'électrode et la deuxième couche d'électrode.

22. Structure à groupement d'électrodes selon la revendication 21, dans laquelle la deuxième couche d'électrode est en oxyde d'indium et d'étain.

23. Structure à groupement d'électrodes selon la revendication 13, dans laquelle chaque dent de l'électrode de pixel comporte :
une première couche d'électrode ayant des parois latérales formées en dents de scie continues ;
une deuxième couche d'électrode disposée sur la première couche d'électrode et ayant un profil rectangulaire ; et
une couche de protection disposée en sandwich entre la première couche d'électrode et la deuxième couche d'électrode.

24. Structure à groupement d'électrodes selon la revendication 23, dans laquelle la deuxième couche d'électrode est en oxyde d'indium et d'étain.

25. Structure à groupement d'électrodes destinée à une zone de pixels d'un affichage à cristaux liquides à mode de commutation en plan, la structure à groupement d'électrodes comporte :
une électrode commune en forme de peigne ayant une barre (28a) se prolongeant transversalement et une pluralité de dents (28d, 28b, 28c) se prolongeant dans une première direction dans le sens de la longueur à partir de la barre ; et
une électrode de pixel en forme de peigne ayant une barre (30a) se prolongeant transversalement et une pluralité de dents (30c, 30b) se prolongeant dans une deuxième direction dans le sens de la longueur à partir de la barre ; **caractérisée en ce que** chaque dent de ladite électrode de pixel possède des parois latérales formées en dents de scie continues et est disposée entre des dents adjacentes de l'électrode commune et de façon parallèle à celles-ci, et chaque dent de l'électrode commune possède des parois latérales formées en dents de scie.

26. Structure à groupement d'électrodes selon la revendication 25, dans laquelle chaque dent de l'électrode commune est formée par une liaison dans le sens de la longueur d'une pluralité de trapèzes, et chaque dent de l'électrode de pixel est formée par une liaison dans le sens de la longueur d'une pluralité de trapèzes inversés.

27. Structure à groupement d'électrodes selon la revendication 26, dans laquelle une longueur de petite base D₁ et une longueur de grande base D₂ du trapèze satisfont la formule *D*_{*2*} ≤ |*D*_{*1*} ± 50 µ*m*|, à l'exclusion du cas où D₂ = D₁.

28. Structure à groupement d'électrodes selon la revendication 26, dans laquelle deux trapèzes adjacents sont reliés par une bande rectangulaire, et deux trapèzes inversés adjacents sont reliés par une bande rectangulaire.

29. Structure à groupement d'électrodes selon la revendication 25, dans laquelle chaque dent de l'électrode commune est formée par une liaison dans le sens de la longueur d'une pluralité de trapèzes inversés, et chaque dent de l'électrode de pixel est formée par une liaison dans le sens de la longueur d'une pluralité de trapèzes.

30. Structure à groupement d'électrodes selon la revendication 29, dans laquelle une longueur de petite base D₁ et une longueur de grande base D₂ des trapèzes inversés satisfont la formule *D*_{*2*} ≤ |*D*_{*1*} ± 50 µ*m*|, à l'exclusion du cas où D₂ = D₁.

31. Structure à groupement d'électrodes selon la revendication 29, dans laquelle deux trapèzes adjacents sont reliés par une bande rectangulaire, et deux trapèzes inversés adjacents sont reliés par une bande rectangulaire.

32. Structure à groupement d'électrodes selon la revendication 25, dans laquelle chaque dent de l'électrode commune est en oxyde d'indium et d'étain.

33. Structure à groupement d'électrodes selon la revendication 25, dans laquelle chaque dent de l'électrode de pixel est en oxyde d'indium et d'étain.
